# FASCICULE DE BREVET EUROPEEN

(11) **EP 1 343 978 B1**
(45) Date de publication et mention de la délivrance du brevet: **04.10.2006**
(21) Numéro de dépôt: 01998748.6
(22) Date de dépôt: 26.11.2001
(51) Int. Cl.: F16D 65/20, F16D 65/56

(54) **CYLINDRE DE FREIN A DISQUE AVEC MECANISME DE FREIN DE PARC ET UN FREIN A DISQUE COMPORTANT UN TEL CYLINDRE**
SCHEIBENBREMSZYLINDER MIT EINEM FESTSTELLBREMSMECHANISMUS UND MIT EINEM SOLCHEN ZYLINDER AUSGESTATTETE SCHEIBENBREMSE
BRAKE DISC CYLINDER WITH PARKING BRAKE MECHANISM AND DISC BRAKE COMPRISING SUCH AS CYLINDER

(30) Priorité: 28.11.2000 FR 0015465
(43) Date de publication de la demande: 17.09.2003
(73) Titulaire: ROBERT BOSCH GMBH, 70442 Stuttgart (DE)
(72) Inventeur: BOISSEAU, Jean-Pierre, F-75014 Paris (FR)
(74) Mandataire: Hurwic, Aleksander Wiktor
(86) Numéro de dépôt international: PCT/FR2001/003735
(87) Numéro de publication internationale: WO 2002/044583

(56) Documents cités:
- WO-A-00/37820
- DE-A- 19 719 510
- FR-A- 2 337 285
- FR-A- 2 793 536
- US-A- 3 991 859

## Description

La présente invention concerne un cylindre de frein à disque avec mécanisme de frein de parc et un frein à disque comportant un tel cylindre, illustré par exemple par le document FR-A-2 337 285.

On sait que les freins à disques qui sont montés sur les roues arrière des véhicules remplissent les fonctions de freins de roulement, qui est leur destination principale, et de frein de parc ou frein de stationnement.

A cet effet, les cylindres des freins comportent un mécanisme intérieur de frein de parc, qui s'actionne par traction d'un câble.

Un exemple connu d'un tel mécanisme est celui dans lequel le câble aboutit à un levier qui entraîne un arbre en rotation. Cet arbre est solidaire de l'un de deux plateaux circulaires qui se font face et emprisonnent entre eux des billes de métal logées dans des gorges, pour former une rampe à billes. Lorsque le plateau solidaire de l'arbre, désigné plateau d'entrée, tourne par rapport au deuxième plateau, mobile en translation et désigné plateau mobile, les billes roulent dans leurs gorges et remontent sur des zones d'échappement bordant lesdites gorges, en écartant les deux plateaux l'un par rapport à l'autre. Par un empilement de pièces, ce mouvement relatif des deux plateaux entraîne le serrage des mâchoires du frein autour du disque.

Ce mécanisme de frein de parc donne satisfaction quant à son fonctionnement.

La présente invention vise à proposer une autre structure de mécanisme de frein de parc d'un frein à disque, qui présente les mêmes avantages que le dispositif connu mais comporte moins de pièces, de sorte que sa fabrication est plus avantageuse.

La présente invention a pour objet un cylindre de frein à disque comprenant un piston apte à se déplacer axialement en direction d'un disque et renfermant un mécanisme de frein de parc constitué par :
- un arbre d'entrée prenant appui sur une butée axiale du cylindre s'opposant au déplacement dudit arbre en direction opposée au disque, ledit arbre étant susceptible d'être entraîné en rotation lors d'une commande du frein de parc,
- un mécanisme de rampe à billes comprenant au moins une première gorge portée par une première pièce pivotante solidaire de l'arbre d'entrée, au moins une seconde gorge en regard de la première gorge, portée par une seconde pièce pivotante apte à pousser le piston en direction du disque et au moins une bille emprisonnée entre ces deux gorges, l'une au moins des gorges étant bordée par une zone d'échappement sur laquelle la bille roule lorsque les deux pièces pivotantes tournent l'une par rapport à l'autre, de sorte que la bille écarte les deux pièces pivotantes l'une de l'autre,
- un organe fileté de rattrapage de jeu dont le dévissage permet d'ajuster sa position au repos par rapport au piston,
caractérisé en ce que l'une des pièces pivotantes est constituée par l'organe fileté de rattrapage de jeu, dont le filet forme la gorge de ladite pièce pivotante.

Dans un mode de réalisation particulier de l'invention, l'organe fileté est une vis et l'autre pièce pivotante est conformée en un manchon entourant la vis.

Dans un autre mode de réalisation de l'invention, l'organe fileté est un manchon taraudé et l'autre pièce pivotante est un arbre engagé dans le manchon.

Dans un mode de réalisation particulier de l'invention, l'organe fileté est la seconde pièce pivotante apte à pousser le piston en direction du disque.

Dans ce cas, l'arbre d'entrée peut constituer directement la première pièce pivotante.

Dans un autre mode de réalisation, l'organe fileté est la première pièce pivotante solidaire de l'arbre d'entrée.

La seconde pièce pivotante, conformée en vis ou en manchon taraudé, sert alors à pousser le piston en direction du disque.

Par rapport au cylindre de l'état de la technique, le cylindre selon l'invention présente l'avantage de comporter une pièce de moins, du fait que l'une des pièces pivotantes constituant la rampe à billes est confondue avec l'organe fileté de rattrapage de jeu.

En d'autres termes, cet organe fileté de rattrapage de jeu remplit, en plus de sa fonction de compensation de l'usure des plaquettes, la fonction de plateau de la rampe à billes.

Dans un mode de réalisation préféré de l'invention, le pas du filet de l'organe fileté est identique à celui de la gorge de l'autre pièce pivotante, ce qui permet aux billes de rouler sans frottement sur le filet de l'organe fileté en même temps qu'elles roulent sur la gorge de l'arbre d'entrée.

Pour la fonction de rattrapage de jeu lors d'un serrage hydraulique, afin que l'organe fileté au repos se dévisse pour demeurer en contact avec le piston en vue d'un prochain serrage mécanique, le cylindre comporte un moyen de fixation de la bille, qui immobile ladite bille dans la gorge de l'autre pièce pivotante lorsque l'organe fileté tire cette bille en direction opposée à l'autre pièce pivotante.

Ainsi, comme dans les cylindres de l'état de la technique, lors d'un actionnement hydraulique du piston pour mettre en oeuvre la fonction de frein de roulement, l'organe fileté est écarté de l'autre pièce pivotante par le piston et les billes logées dans les gorges de l'autre pièce pivotante se comportent comme un filet dans lequel l'organe fileté se dévisse et rattrape le jeu dû à l'usure des plaquettes.

Dans un mode de réalisation particulier, l'autre pièce pivotante comporte une pluralité de premières gorges, de préférence trois, et l'organe fileté porte la même pluralité de filets, de préférence trois.

Dans le cylindre de frein selon l'invention, il est préférable de prévoir, dans la gorge de l'autre pièce pivotante, une zone d'échappement produisant un déplacement axial de la bille, également désigné saut, égal au double de celui d'un plateau d'une rampe à bille conventionnelle, car le roulement de la bille sur le filet de l'organe fileté ne produit pas le saut obtenu par un roulement sur la zone d'échappement d'un plateau conventionnel. En d'autres termes, dans le cylindre de frein selon l'invention, le déplacement axial du piston ne résulte pas du cumul des sauts de la bille sur un plateau d'entrée et sur un plateau mobile, mais provient uniquement du roulement de la bille dans la gorge de l'autre pièce pivotante, laquelle doit donc engendrer un saut deux fois plus important.

La présente invention a également pour objet un frein à disque comprenant un cylindre tel que décrit ci-dessus.

Dans le but de mieux faire comprendre l'invention, on va en décrire maintenant un mode de réalisation donné à titre d'exemple non limitatif, en référence au dessin annexé dans lequel :
- la figure 1 est une vue en perspective avec arraché partiel d'un frein à disque selon un premier mode de réalisation de l'invention,

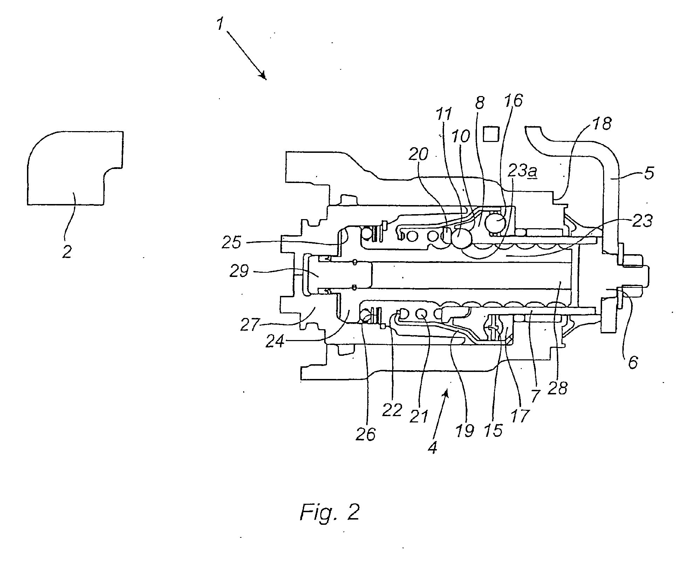

- la figure 2 est une section longitudinale selon II-II de la figure 1,
- la figure 3 est une vue en perspective de l'extrémité interne du manchon,
- la figure 4 est une section longitudinale d'un frein à disque selon un deuxième mode de réalisation de l'invention.

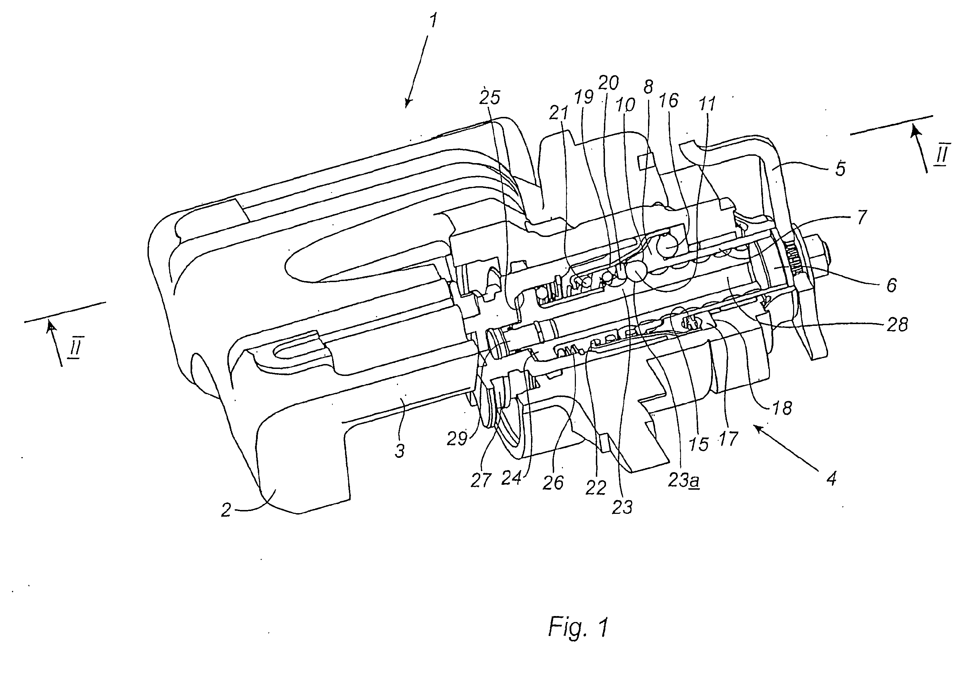

Le frein représenté à la figure 1 comprend un étrier 1 constitué d'un nez 2 et d'une voûte 3 solidaire d'un cylindre 4 dont la cavité intérieure renferme les organes nécessaires à l'actionnement hydraulique du frein de roulement et à l'actionnement mécanique du frein de parc.

De la droite vers la gauche (par rapport à la figure 1), le cylindre 4 comprend un bras pivotant 5 auquel doit se raccorder un câble de traction (non représenté) mû par un levier de frein à main présent dans l'habitacle du véhicule.

Le bras pivotant 5 est monté sur un arbre 6 extérieur au cylindre, solidaire d'une extrémité, en saillie dudit cylindre, d'un manchon 7 présent dans la cavité du cylindre.

Ce manchon se termine, à l'opposé de l'arbre, par un anneau 8 présentant une paroi frontale 9 dans laquelle sont ménagées des gorges 10 débouchant à la fois axialement et radialement vers l'intérieur du manchon.

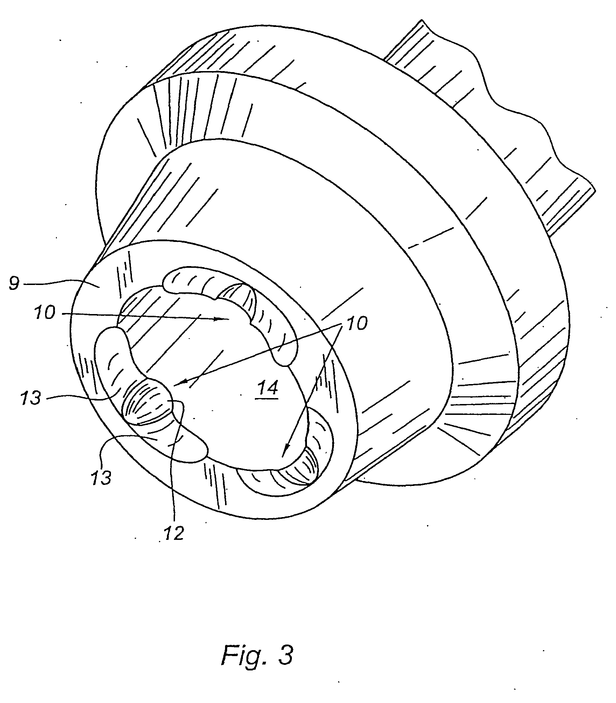

Comme on le voit mieux à la figure 3, chaque gorge 10, qui loge une bille 11 (figure 1) dépassant vers l'intérieur du manchon, est conformée comme une gorge d'un plateau d'entrée d'une rampe à bille, c'est-à-dire qu'elle comporte un fond 12 et deux zones d'échappement 13 en arc de cercle reliant le fond 12 de la gorge à la paroi frontale 9 de l'anneau, à ceci près qu'elle est tronquée en son milieu selon une surface cylindrique coaxiale au manchon, située dans le prolongement d'un canal axial intérieur 14 du manchon.

En roulant sur la zone d'échappement 13 tout en conservant son centre dans la surface cylindrique précitée, la bille 11 s'éloigne angulairement et axialement du fond 12 de la gorge. Cet éloignement axial est désigné saut de la bille.

L'anneau 8 du manchon comporte aussi une paroi dorsale 15 qui reçoit un roulement à billes 16 en appui sur une bague annulaire 17 entourant le manchon, elle-même en appui sur un épaulement 18 formé par la cavité intérieure du cylindre.

La bague annulaire 17 est solidaire d'une cloche 19 ouverte en son centre qui enferme le roulement à billes 16, l'anneau 8 du manchon, les billes 11, une bague de friction 20 en appui sur les billes et un ressort hélicoïdal 21 disposé dans le prolongement du manchon 7 et comprimé entre le rebord frontal 22 de la cloche 19 et la bague de friction 20.

La cloche 19 est désolidarisée du manchon 7 grâce au roulement à billes 16, de sorte que le manchon est libre de suivre les mouvements de rotation du bras pivotant 6.

Une vis 23 à trois filets 23a est engagée dans le canal intérieur 14 du manchon, chacun de ses filets logeant une des billes 11.

La vis 23 s'étend sur la quasi-totalité de la longueur du manchon et les sommets plats de ses filets prennent appui contre la paroi du canal intérieur 14 du manchon, afin d'assurer une bonne coaxialité de ces deux pièces.

Les billes, logées dans les filets, définissent la position axiale de la vis par rapport au manchon.

A son extrémité gauche dirigée vers l'étrier, la vis comporte une tête 24 en forme de poussoir de piston, munie d'un bord tronconique 25 anti-rotation, comme cela est connu dans les cylindres de frein de l'état de la technique.

Une bague à ressort 26 est retenue par un jonc dans le piston 27 pour exercer son action sur la tête 24 de la vis par l'intermédiaire d'un roulement à billes, de manière que la vis demeure en contact avec le piston.

Le piston 27 est lui-même immobilisé en rotation dans un support de plaquette (non représenté).

La vis comporte un canal axial 28 qui est fermé du côté de la tête par un obturateur 29.

On va maintenant décrire le fonctionnement du mécanisme de frein de parc.

Lorsque l'utilisateur du véhicule actionne le frein à main, il exerce une traction sur le câble, lequel fait pivoter le bras pivotant 5 relié au manchon 7.

Le manchon tourne alors dans le cylindre 4 avec l'arbre relié au bras pivotant.

La tête 24 de la vis étant appliquée par la bague élastique 26 contre le piston, elle ne peut pas tourner autour de son axe.

Le mouvement pivotant du manchon 7 provoque donc le roulement des billes 11 entre les gorges 10 de l'anneau 8 solidaire du manchon et les filets 23a de la vis 23.

Les billes 11 roulent alors sur les zones d'échappement 13 des gorges et, tout en se déplaçant angulairement, se déplacent axialement en direction du piston.

Ce déplacement axial des billes 11 provoque le déplacement axial de la vis 23 en direction du piston, lequel est donc poussé vers l'étrier, ce qui entraîne le freinage.

Le mécanisme décrit ici assure également le rattrapage de jeu dû à l'usure des plaquettes de frein de la manière suivante.

Lors d'un freinage commandé par la pédale de frein, du fluide hydraulique sous pression pénètre dans la cavité du cylindre et repousse le piston 27 en direction de l'étrier.

Le piston entraîne avec lui la vis 23 grâce à la présence du jonc, de la bague élastique 26 et du roulement à billes voisin de celle-ci.

La vis 23, retenue par les billes 11, se décolle très légèrement du cône antifriction 25 et se désolidarise en rotation du piston.

Les billes 11 sont immobilisées dans les gorges 10 du manchon par la bague de friction 20 contre laquelle elles s'appuient du fait de la traction exercée par la vis.

Les billes, immobiles, se comportent donc comme un taraudage et la vis, libre en rotation, se dévisse par rapport à ce taraudage en s'extrayant légèrement du manchon et rattrape le jeu.

Le ressort hélicoïdal 21, qui applique la bague de friction 20 contre les billes 11, est taré de manière à immobiliser les billes lors du rattrapage de jeu, mais également de manière à laisser les billes rouler dans les gorges lors de l'actionnement du frein de parc.

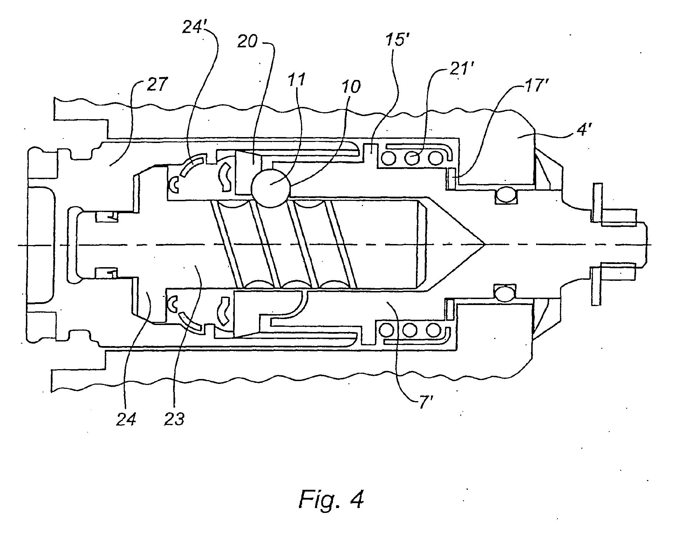

Dans le mode de réalisation de la figure 4, on retrouve le manchon 7' portant les billes 11 logées dans les gorges 10 et la vis 23 dont la tête 24 en forme de poussoir repousse le piston 27.

Dans ce mode de réalisation, l'encombrement du cylindre 4' est notablement réduit grâce au remplacement de la bague d'appui et du roulement à billes, de la cloche, du ressort hélicoïdal servant à immobiliser les billes pour le rattrapage de jeu.

La bague d'appui 17 et le roulement à billes 16 sont remplacés par une rondelle antifriction 17'. Le ressort hélicoïdal 21' est placé autour du manchon, entre le bord d'extrémité de la cloche 19' et une collerette 15' en saillie de la paroi extérieure du manchon 7'. Ce ressort repousse le manchon à l'intérieur de la cloche en direction de la bague de friction 20 qui est retenue par le rebord frontal 22 de la cloche.

Afin de réduire davantage l'encombrement, le roulement à billes, la bague élastique 26 et le jonc qui maintiennent la tête 24 de la vis au contact du piston sont remplacés par une rondelle élastique 24' qui est retenue axialement dans une rainure formée dans le piston.

Le fonctionnement de ce cylindre est le même que celui du cylindre de frein précédemment décrit.

Les exemples fournis ci-dessus ne présentent aucun caractère limitatif de la portée de l'invention, laquelle est définie par les revendications annexées.

## Revendications

1. Cylindre de frein à disque comprenant un piston (27) apte à se déplacer axialement en direction d'un disque et renfermant un mécanisme de frein de parc constitué par :
- un arbre d'entrée (6) prenant appui sur une butée axiale (18) du cylindre s'opposant au déplacement dudit arbre en direction opposée au disque, ledit arbre étant susceptible d'être entraîné en rotation lors d'une commandé du frein de parc,
- un mécanisme de rampe à billes comprenant au moins une première gorge (10) portée par une première pièce pivotante (7) solidaire de l'arbre d'entrée, au moins une seconde gorge (23a) en regard de la première gorge, portée par une seconde pièce pivotante (23) apte à pousser le piston en direction du disque et au moins une bille (11) emprisonnée entre ces deux gorges, l'une au moins des gorges étant bordée par une zone d'échappement (13) sur laquelle la bille roule lorsque les deux pièces pivotantes tournent l'une par rapport à l'autre, de sorte que la bille écarte les deux pièces pivotantes l'une de l'autre.
- un organe fileté (23) dé rattrapage de jeu dont le dévissage permet d'ajuster sa position au repos par rapport au piston,
**caractérisé en ce que** l'une (23) des pièces pivotantes est constituée par l'organe fileté. (23) de rattrapage de jeu, dont le filet (23a) forme la gorge de ladite pièce pivotante.

2. Cylindre de frein selon la revendication 1, **caractérisé en ce que** l'organe fileté est une vis (23) et l'autre pièce pivotante est conformée en un manchon (7) entourant la vis.

3. Cylindre de frein selon la revendication 1, **caractérisé en ce que** l'organe fileté est un manchon taraudé et l'autre pièce pivotante est un arbre engagé dans le manchon.

4. Cylindre de frein selon l'une quelconque des revendications 1 à 3, **caractérisé en ce que** l'organe fileté (23) est la seconde pièce pivotante apte à pousser le piston (27) en direction du disque.

5. Cylindre de frein selon l'une quelconque des revendications 1 à 3, **caractérisé en que** l'organe fileté est la première pièce pivotante solidaire de l'arbre d'entrée.

6. Cylindre de frein selon l'une quelconque des revendications 1 à 5, **caractérisé en ce que** le pas du filet (23a) de l'organe fileté (23) est identique à celui de la gorge (10) de l'autre pièce pivotante.

7. Cylindre de frein selon l'une quelconque des revendications 1 à 6, **caractérisé en ce qu'**il comporte un moyen (20) de fixation de la bille, qui immobile ladite bille (11) dans la gorgé (10) de l'autre pièce pivotante (7) lorsque l'organe fileté (23) tire cette bille en direction opposée à l'autre pièce pivotante

8. Cylindre de frein selon l'une quelconque des revendications 1 à 7, **caractérisé en ce que** l'autre pièce pivotante (7) comporte une pluralité de premières gorges (10), de préférence trois, et l'organe fileté (23) porte la même pluralité de filets (23a), de préférence trois.

9. Frein à disque, **caractérisé en ce qu'**il comporte un cylindre selon l'une quelconque des revendications 1 à 8.

## Claims

1. Disk-brake cylinder comprising a piston (27) capable of moving axially in the direction of a disk and containing a parking brake mechanism consisting of:
- an input shaft (6) resting against an axial stop (18) of the cylinder opposing the movement of said shaft in the direction away from the disk, said shaft being capable of being driven in rotation when the parking brake is actuated,
- a ball ramp mechanism comprising at least a first groove (10) borne by a first pivoting piece (7) secured to the input shaft, at least a second groove (23a) opposite the first groove, borne by a second pivoting piece (23) capable of pushing the piston in the direction of the disk and at least one ball (11) trapped between these two grooves, at least one of the grooves being bordered by an escapement zone (13) on which the ball rolls when the two pivoting pieces rotate one with respect to the other, so that the ball causes the two pivoting pieces to move apart,
- a threaded member (23) for taking up play, the unscrewing of which allows its position at rest to be adjusted with respect to the piston,
**characterized in that** one (23) of the pivoting pieces consists of the threaded member (23) for taking up play, the thread (23a) of which forms the groove of said pivoting piece.

2. Brake cylinder according to claim 1, **characterized in that** the threaded member is a screw (23) and the other pivoting piece is shaped as a sleeve (7) surrounding the screw.

3. Brake cylinder according to claim 1, **characterized in that** the threaded member is a tapped sleeve and the other pivoting piece is a shaft engaged in the sleeve.

4. Brake cylinder according to any one of claims 1 to 3, **characterized in that** the threaded member (23) is the second pivoting piece capable of pushing the piston (27) in the direction of the disk.

5. Brake cylinder according to any one of claims 1 to 3, **characterized in that** the threaded member is the first pivoting piece secured to the input shaft.

6. Brake cylinder according to any one of claims 1 to 5, **characterized in that** the pitch of the thread (23a) of the threaded member (23) is identical to that of the groove (10) of the other pivoting piece.

7. Brake cylinder according to any one of claims 1 to 6, **characterized in that** it comprises a means (20) of fixing the ball, which immobilizes said ball (11) in the groove (10) of the other pivoting piece (7) when the threaded member (23) pulls this ball in the direction away from the other pivoting piece.

8. Brake cylinder according to any one of claims 1 to 7, **characterized in that** the other pivoting piece (7) has a number of first grooves (10), preferably three, and the threaded member (23) bears the same number of threads (23a), preferably three.

9. Brake disk, **characterized in that** it comprises a cylinder according to any one of claims 1 to 8.

## Patentansprüche

1. Scheibenbremszylinder, der einen Kolben (27) aufweist, welcher sich axial zu einer Scheibe verlagern kann, und der einen Handbremsmechanismus umschließt, der besteht aus:
- einer Antriebswelle (6), die an einem axialen Anschlag (18) des Zylinders anliegt, der der Verlagerung der Welle in eine zur Scheibe entgegengesetzte Richtung entgegenwirkt, wobei die Welle bei einer Handbremssteuerung in Drehung versetzt werden kann,
- einem Rampenmechanismus mit Kugeln, der mindestens eine erste Nut (10) aufweist, die von einem ersten, fest mit der Antriebswelle verbundenen Schwenkteil (7) getragen ist, mindestens eine der ersten Nut gegenüberliegende zweite Nut (23a), die von einem zweiten Schwenkteil (23) getragen ist, das den Kolben zur Scheibe drücken kann, und mindestens eine Kugel (11), die zwischen diesen beiden Nuten eingeschlossen ist, wobei mindestens eine der Nuten von einem Ausweichbereich (13) umrandet ist, auf dem die Kugel rollt, wenn die beiden Schwenkteile zueinander gedreht werden, so dass die Kugel die beiden Schwenkteile voneinander entfernt;
- einem Gewindeorgan (23) zur Spielbeseitigung, bei dem das Abschrauben das Einstellen seiner Ruheposition in Bezug auf den Kolben ermöglicht,
**dadurch gekennzeichnet**, das eines (23) der Schwenkteile durch das Gewindeorgan (23) zur Spielbeseitigung gebildet ist, bei dem das Gewinde (23a) die Nut des Schwenkteils bildet.

2. Bremszylinder nach Anspruch 1, **dadurch gekennzeichnet, dass** das Gewindeorgan eine Schraube (23) ist und das andere Schwenkteil als Hülse (7) ausgebildet ist, die die Schraube umgibt.

3. Bremszylinder nach Anspruch 1, **dadurch gekennzeichnet, dass** das Gewindeorgan eine Hülse mit Innengewinde und das andere Schwenkteil eine Welle ist, die in die Hülse eingesetzt ist.

4. Bremszylinder nach einem der Ansprüche 1 bis 3, **dadurch gekennzeichnet, dass** das Gewindeorgan (23) das zweite Schwenkteil ist, das den Kolben (27) zur Scheibe drücken kann.

5. Bremszylinder nach einem der Ansprüche 1 bis 3, **dadurch gekennzeichnet, dass** das Gewindeteil das erste Schwenkteil ist, das fest mit der Antriebswelle verbunden ist.

6. Bremszylinder nach einem der Ansprüche 1 bis 5, **dadurch gekennzeichnet, dass** die Steigung des Gewindes (23a) des Gewindeorgans (23) mit derjenigen der Nut (10) des anderen Schwenkteils identisch ist.

7. Bremszylinder nach einem der Ansprüche 1 bis 6, **dadurch gekennzeichnet, dass** er ein Mittel (20) zur Befestigung der Kugel aufweist, das die Kugel (11) in der Nut (10) des anderen Schwenkteils (7) blockiert, wenn das Gewindeorgan (23) diese Kugel in die zum anderen Schwenkteil entgegengesetzte Richtung zieht.

8. Bremszylinder nach einem der Ansprüche 1 bis 7, **dadurch gekennzeichnet, dass** das andere Schwenkteil (7) mehrere, vorzugsweise drei, erste Nuten (10) aufweist und das Gewindeorgan (23) die gleiche Anzahl von Gewinden (23a), vorzugsweise drei, trägt.

9. Scheibenbremse, **dadurch gekennzeichnet, dass** sie einen Zylinder nach einem der Ansprüche 1 bis 8 aufweist.
